# EUROPÄISCHE PATENTSCHRIFT

(11) **EP 0 894 710 B1**
(45) Veröffentlichungstag und Bekanntmachung des Hinweises auf die Patenterteilung: **02.03.2005**
(21) Anmeldenummer: 98890196.3
(22) Anmeldetag: 07.07.1998
(51) Int. Cl.: B64C 1/14, F16B 5/02

(54) **Einrichtung zur lösbaren Befestigung von Abdeckplatten od-dgl.**
Releasably fixing device for cover panels or the like
Fixation démontable pour panneaux de recouvrement ou similaire

(30) Priorität: 07.07.1997 AT 116297
(43) Veröffentlichungstag der Anmeldung: 03.02.1999
(73) Patentinhaber: Fischer Advanced Composite Components AG, 4910 Ried im Innkreis (AT)
(72) Erfinder: Stephan, Walter, Dipl.-Ing., 4973 St. Martin (AT); Filsegger, Hermann, Dipl.-Ing., 4910 Ried im Innkreis (AT)
(74) Vertreter: Köhler-Pavlik, Johann, Dipl.-Ing.

(56) Entgegenhaltungen:
- DE-A- 4 138 047
- DE-C- 3 814 183
- DE-U- 29 716 096
- GB-A- 1 317 752
- US-A- 4 050 208

## Beschreibung

Die Erfindung betrifft eine Anordnung, umfassend eine Abdeckplatte, eine Tragkonstruktion und eine Einrichtung mit zumindest zwei Befestigungselementen, wobei alle Bestandteile der Befestigungselemente zur Verbindung mit der Abdeckplatte und der Tragkonstruktion eingerichtet sind, wobei die zur Verbindung mit der Abdeckplatte eingerichteten Befestigungselemente ausschließlich mit der der Tragkonstruktion zugewandten Seite der Abdeckplatte verbindbar sind.

Weiters betrifft die Erfindung eine Abdeckplatte für eine derartige Anordnung mit zumindest zwei Befestigungselementen zur Verbindung der Abdeckplatte mit einer Tragkonstruktion, wobei die Befestigungselemente ausschließlich an der der Tragkonstruktion zugewandten Seite der Abdeckplatte angeordnet sind.

Unter den Begriff Abdeckplatten fallen alle zur Ausgestaltung von Wänden, beispielsweise des Flugzeuginnenraums dienende Elemente, mit welchen dahinter befindliche Einrichtungen abgedeckt werden sollen, insbesondere Deckenpaneele in Flugzeugen. Die Abdeckplatten können dabei verschiedenste Größen und Formen aufweisen. Es ist notwendig, die hinter den Abdeckplatten befindlichen Einrichtungen bzw. Systeme leicht zugänglich zu machen, um diese warten oder im Falle eines Defektes reparieren bzw. austauschen zu können. Herkömmliche Abdeckplatten sind meist nur mit Werkzeugeinsatz mit relativ hohem Aufwand entfernbar. Dadurch wird insbesondere die Fehlersuche zu einem aufwendigen und zeitraubenden Unterfangen. Häufig befinden sich an der Sichtseite der Abdeckplatte Löcher, über welche die Befestigungselemente z.B. mittels eines Schraubenziehers gelöst werden können. Aus optischen Gründen werden die Löcher natürlich möglichst klein gehalten, was wiederum zur Folge hat, daß einerseits das genaue Positionieren des Schraubenziehers größeres Geschick und mehr Zeit erfordert und andererseits durch Fehlpositionieren des Werkzeugs eine Beschädigung der Abdeckplatte im Bereich der Öffnung resultiert. Darüber hinaus kann ein Öffnen der Befestigungselemente und somit ein Abnehmen der Abdeckplatten durch Unbefugte nicht verhindert werden.

Beispielsweise beschreibt die DE 38 14 183 C1 eine Befestigungsvorrichtung für plattenförmige Bauteile, insbesondere Wandverkleidungsplatten im Bereich der Luftfahrttechnik, bei der die Platten über Steckverbindungen an der Tragkonstruktion montiert werden können. Zur endgültigen Befestigung werden die Platten durch Schraubenbolzen oder Nieten an der Struktur befestigt.

Die US 4 050 208 A beschreibt eine Einrichtung zur lösbaren Befestigung von Abdeckplatten im Flugzeuginnenraum, wobei die Abdeckplatten in Abstand voneinander über Befestigungselemente mit der Tragstruktur verbunden werden und der Zwischenraum mit einer entsprechenden Leiste abgedeckt wird. Zur Befestigung werden Schrauben eingesetzt, wodurch die Verwendung von Werkzeug zur Montage und Demontage der Abdeckplatte erforderlich ist. Aufgabe der Erfindung ist die Schaffung von Maßnahmen, durch welche die Abdeckplatten rasch und einfach ohne Zuhilfenahme von Werkzeug abnehmbar und befestigbar sind unter Vermeidung der obengenannten Nachteile. Lose Bestandteile, welche bei der Montage und Demontage abhanden kommen könnten, sollen vermieden werden.

Diese Aufgabe wird erfindungsgemäß durch eine oben genannte Anordnung gelöst, bei der zumindest ein Befestigungselement als Loslager zur Aufnahme der im wesentlichen senkrecht zur Abdeckplatte wirkenden Kräfte und zumindest ein Befestigungselement als Festlager zur Aufnahme auch der im Wesentlichen in Richtung der Abdeckplatte wirkenden Kräfte ausgebildet ist, und wobei das oder jedes als Festlager ausgebildete Befestigungselement Mittel zur werkzeuglosen Ver- und Entriegelung aufweist. Durch die Verbindung aller Bestandteile der Befestigungselemente entweder mit der Abdeckplatte und/oder mit der Tragkonstruktion werden lose Teile bei der Montage oder Demontage vermieden. Lose Teile können störende Geräusche hervorrufen oder auch eine Gefahrenquelle, insbesondere im Flugzeug, darstellen. Durch die erfindungsgemäße Anordnung aller mit der Abdeckplatte verbundenen Bestandteile der Befestigungselemente ausschließlich an der, der Tragkonstruktion zugewandten Seite der Abdeckplatte, weist die im befestigten Zustand der Abdeckplatte sichtbare Seite keinerlei Löcher oder Schlitze zur Zugänglichkeit der Befestigungselemente auf. Neben optischen Vorteilen sind auch die bessere Reinigbarkeit, die Vermeidung von Beschädigung durch das in die Löcher oder Schlitze einzusteckende Werkzeug sowie die Vermeidung unbefugten Öffnens der Befestigungsmittel zu erwähnen. Über das oder jedes Loslager wird die Abdeckplatte an der Tragkonstruktion aufgehängt und über das oder jedes Festlager fixiert, wobei die Fixierung werkzeuglos ver- und entriegelt werden kann. Dadurch ist eine raschere und einfachere Wartung beispielsweise des Flugzeuges möglich und es können Startverzögerungen, die aus längeren Wartungsarbeiten resultieren, verhindert werden.

Vorteilhafterweise sind alle Befestigungselemente zur randseitigen Verbindung mit der Abdeckplatte eingerichtet. Dadurch wird einerseits eine optimale Verteilung der Kräfte erzielt und andererseits eine bessere Zugänglichkeit der Mittel zur Ver- und Entriegelung der als Festlager ausgebildeten Befestigungselemente ermöglicht.

Wenn jedes als Loslager ausgebildete Befestigungselement zur Verbindung an einer Randseite der Abdeckplatte und jedes als Festlager ausgebildete Befestigungselement zur Verbindung an der gegenüberliegenden Randseite der Abdeckplatte eingerichtet ist, wird eine einfache Montage bzw. Demontage und darüber hinaus eine optimale Wartung der hinter der Abdeckplatte befindlichen Einrichtungen ermöglicht. So brauchen im Falle der Fehlersuche oder Inspektion lediglich die als Festlager ausgebildeten Befestigungselemente durch werkzeuglose Betätigung der Mittel zur Ver- und Entriegelung geöffnet werden, während die als Loslager ausgeführten Befestigungselemente nicht betätigt werden müssen. Beispielsweise wird die Abdeckplatte nach Öffnen der Festlager um einen zulässigen Bereich aufgeklappt, die dahinterliegenden Einrichtungen inspiziert und gegebenenfalls gewartet und danach wieder zugeklappt. Dadurch, daß die Abdeckplatte während der Wartungsarbeiten nicht abmontiert werden muß, ist eine schnellere Wartung möglich. Darüber hinaus stören die herumliegenden, demontierten Abdeckplatten nicht, was insbesondere im engen Bereich innerhalb eines Flugzeuges problematisch wäre.

Gemäß einem weiteren Erfindungsmerkmal ist jedes als Loslager ausgebildete Befestigungselement durch einen mit der Abdeckplatte fest verbindbaren Bolzen od. dgl. gebildet, welcher Bolzen od. dgl. in einen mit der Tragkonstruktion fest verbindbaren Lagerbock od. dgl. einhängbar ist, und jedes als Festlager ausgebildete Befestigungselement als Schnappverschluss ausgebildet, welcher Schnappverschluss werkzeuglos öffenbar ist. Dies stellt eine bevorzugte Realisierungsmöglichkeit der vorliegenden Erfindung dar.

Gemäß einer vorteilhaften Ausführungsform der Erfindung ist der Bolzen mit der Abdeckplatte durch Verklebung verbindbar und der Bolzen mit einem Kopf ausgebildet.

Nach einer Konstruktionsvariante ist der als Montageeinheit dienende Lagerbock kastenförmig, einseitig offen, unten geschlitzt ausgestaltet.

Zur Sicherung der Verbindung zwischen Bolzen und Lagerbock ist an diesem vorteilhafterweise eine Feder befestigt ist, die derart geformt ist, daß sie den Bolzen mit dem Kopf festhält.

Vorteilhafterweise ist das als Schnappverschluss ausgebildete Festlager durch einen seitlich der Abdeckplatte zugänglichen Drehhebel werkzeuglos öffenbar. Beispielsweise kann durch einfache Verdrehung des Drehhebels mit den Fingern eine Entriegelung der Befestigung der Abdeckplatte erfolgen. Zu diesem Zweck muß das Wartungspersonal lediglich mit der Hand entlang der Randseite der Abdeckplatte gleiten und den Drehhebel in die entsprechende Entriegelungsposition bringen. Dadurch kann die Wartung sehr rasch und einfach durchgeführt werden. Zur besseren optischen Auffindbarkeit kann der Drehhebel mit einer auffälligen Farbe, beispielsweise rot, markiert sein.

Gemäß einem weiteren Erfindungsmerkmal ist eine auf den Drehhebel wirkende Rückstellfeder od. dgl. vorgesehen, durch welche der Drehhebel im offenem Zustand des Schnappverschlusses in eine entriegelnde Stellung bringbar ist. Durch diese Maßnahme erkennt das Wartungspersonal durch die Stellung des Drehhebels, ob der Schnappverschluss des Festlagers geöffnet oder verriegelt ist. Nur bei ordnungsgemäß geschlossenem Schnappverschluss, also bei ordnungsgemäßer Befestigung der Abdeckplatte an der Tragkonstruktion befindet sich der Drehhebel in der verriegelten Stellung. Andernfalls wird der Drehhebel durch die Rückstellfeder od. dgl. in die entriegelte Position gezwungen.

Gemäß einer Variante dazu kann der Drehhebel zum Schutz vor ungewollter Betätigung in der, den Schnappverschluss verriegelnden Stellung Haltemittel aufweisen, wobei der Drehhebel in Überwindung dieser Haltemittel in eine, den Schnappverschluss entriegelnde Stellung bringbar ist. Dadurch ist einerseits das Auffinden der verriegelten Position durch Einrasten der Haltemittel besser erkennbar und andererseits eine ungewollte Entriegelung beispielsweise durch Vibration vermeidbar. Die Haltemittel können durch verschiedenste Konstruktionen, beispielsweise durch eine federnd gelagerte Kugel, welche in verriegelter Stellung teilweise in ein entsprechendes Loch oder eine Vertiefung ragt, realisiert werden.

Gemäß einer Ausführungsvariante ist vorgesehen, dass jedes als Schnappverschluss ausgebildete Festlager durch einen mit der Abdeckplatte od. dgl. vorzugsweise durch Verklebung fest verbindbaren Bolzen gebildet ist, welcher Bolzen am freien Ende zugespitzt und mit seitlichen Kerben versehen ist, und dass eine mit der Tragkonstruktion verbundene Klammer vorgesehen ist, deren zwei federnde Enden in die Kerben des Bolzens eingreifen, wobei die Klammer um die Achse des Bolzens gegenüber der Tragkonstruktion drehbar angeordnet ist.

Weitere Vorteile werden durch die konstruktiven Maßnahmen gemäß der Patentansprüche 12 bis 15 erzielt.

Gelöst wird die erfindungsgemäße Aufgabe auch durch eine Abdeckplatte für eine oben genannte Anordnung mit zumindest zwei Befestigungselementen zur Verbindung der Abdeckplatte mit einer Tragkonstruktion, wobei die Befestigungselemente ausschließlich an der der Tragkonstruktion zugewandten Seite der Abdeckplatte angeordnet sind, und zumindest ein Befestigungselement als Loslager zur Aufnahme der im Wesentlichen senkrecht zur Abdeckplatte wirkenden Kräfte und zumindest ein Befestigungselement als Festlager zur Aufnahme auch der im Wesentlichen in Richtung der Abdeckplatte wirkenden Kräfte ausgebildet ist, und wobei das oder jedes als Festlager ausgebildete Befestigungselement Mittel zur werkzeuglosen Ver- und Entriegelung aufweist.

Weitere Vorteile werden durch die konstruktiven Maßnahmen gemäß der Patentansprüche 21 bis 27 erzielt.

Um Beschädigungen an Bauteilkomponenten und Verletzungen des Wartungspersonals durch ein zu weites Herunterklappen der Abdeckplatte zu vermeiden, ist gemäß einem weiteren Erfindungsmerkmal vorgesehen, dass zumindest ein Halteseil od. dgl. jeweils mit dem einen Ende an der Abdeckplatte bzw. einem damit verbundenen Bauteil und jeweils mit dem anderen Ende an der Tragkonstruktion bzw. einem damit verbundenen Bauteil befestigt ist, und daß die Befestigungen des oder jedes Halteseils od. dgl. werkzeuglos öffenbar sind. Somit wird die Abdeckplatte bei geöffnetem Festlager durch das oder jedes Halteseil getragen, wodurch das Wartungspersonal eine freie Hand für andere Tätigkeiten gewinnt. Sollte die Abdeckplatte entfernt werden, kann das oder jedes Halteseil rasch und in einfacher Weise ohne Zuhilfenahme von Werkzeug gelöst werden.

Um Vibrationen und dadurch resultierende Lärmentwicklung, insbesondere im Flugzeug zu vermeiden, weisen die Befestigungselemente gemäß einem weiteren Erfindungsmerkmal Mittel zur Dämpfung von Vibrationen, beispielsweise Dämpfungsringe aus elastischem Material, Federn od. dgl. auf. Auch diese Dämpfungsmittel sind zur Vermeidung von losen Teilen mit den Befestigungselementen verbunden.

Wenn an den Befestigungselementen Einrichtungen zur lösbaren Verbindung der Abdeckplatte mit daran anschließenden Abdeckplatten od. dgl. vorgesehen sind, können Anordnungen, welche aus mehreren Abdeckplatten bestehen, oder Anbindungen der Abdeckplatten an bestehende oder anschließende Konstruktionen, optimal realisiert werden. Beispielsweise können damit Seitenpaneele mit den Deckenpaneelen verbunden werden.

Gemäß einer einfachen Konstruktionsvariante können diese Einrichtungen zur lösbaren Verbindung der Abdeckplatte mit daran anschließenden Abdeckplatten od. dgl. durch Federelemente gebildet sein. So kann beispielsweise eine an das Deckenpaneel im Flugzeug anschließende Lampenabdeckung durch das Federelement, z.B. eine Plattfeder an das Deckenpaneel gepreßt werden und somit in ihrer gewünschten Lage fixiert werden. Zum Zweck der Demontage des Deckenpaneels kann die Lampenabdeckung in Überwindung der Federkraft diese Plattfeder seitlich aus seiner Lage geschoben werden, sodaß ein Spalt zwischen Lampenabdeckung und Deckenpaneel freigegeben wird, sodaß z.B. der Drehhebel zur Entriegelung des Festlagers betätigbar ist.

Anhand der beiliegenden Abbildungen, welche Ausführungsbeispiele einer erfindungsgemäßen Einrichtung zur Befestigung von Deckenpaneelen zur Auskleidung eines Flugzeuginnenraums zeigen, wird die Erfindung näher beschrieben.

Darin zeigen:
- Fig. 1: eine perspektivische Ansicht eines mit der erfindungsgemäßen Einrichtung versehenen Deckenpaneels sowie einer daran anschließenden Lampenabdeckung,
- Fig. 2a: eine Ausführungsform eines Festlagers in lotrechtem Querschnitt,
- Fig. 2b: das Festlager gemäß Fig. 2a in der Ansicht von oben,
- Fig. 2c: eine Seitenansicht der Anordnung gemäß Fig. 2a von links,
- Fig. 3a: eine andere Ausführungsform eines Festlagers in lotrechtem Querschnitt,
- Fig. 3b: das Festlager gemäß Fig. 3a in der Ansicht von oben,
- Fig. 4a: eine Ausführungsform eines Loslagers in lotrechtem Querschnitt,
- Fig. 4b: das Loslager gemäß Fig. 4a in der Ansicht von oben, und
- Fig. 4c: eine Seitenansicht der Anordnung gemäß Fig. 4a von rechts.

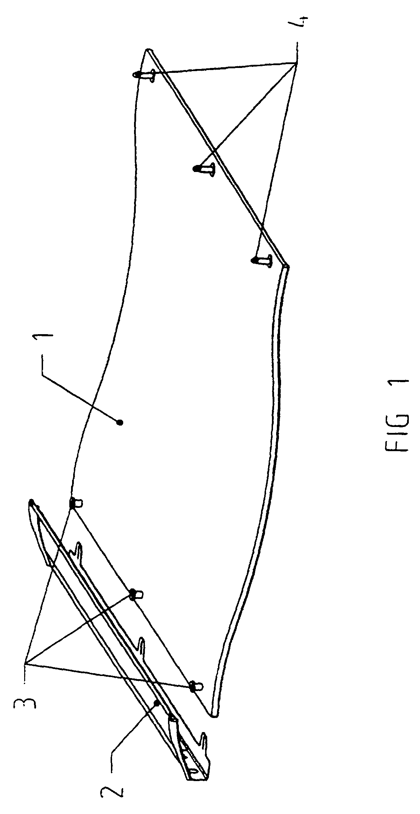

In Fig. 1 ist ein Deckenpaneel 1 für die Ausgestaltung des Flugzeuginnenraums in perspektivischer Ansicht dargestellt. Das dargestellte Deckenpaneel 1 dient zur Abdeckung des Deckenbereichs des Flugzeuginnenraums über dem Gang zwischen den Sitzreihen. Seitlich an das Deckenpaneel 1 kann ein Seitenpaneel 2 anschließen, welches beispielsweise so gestaltet sein kann, daß es als Abdeckung für die Lampen zur Beleuchtung des Flugzeuginnenraums dient. An das Seitenpaneel 2 schließt unten üblicherweise das Gepäckablagefach an (nicht dargestellt). An der rechten Seite des Deckenpaneels 1 kann ebenfalls ein Seitenpaneel in Form einer Lampenabdeckung anschließen (nicht dargestellt). Erfindungsgemäß sind auf einer Randseite des Deckenpaneels 1 Befestigungselemente angeordnet, welche eine lose Lagerung des Deckenpaneels 1 an einer, üblicherweise am Flugzeugrumpf montierten Tragkonstruktion erlauben. Im dargestellten Beispiel haben die Befestigungselemente die Form von Bolzen 3, welche in entsprechend komplementär gestalteten Elementen an der Tragkonstruktion befestigt werden, sodaß über die Bolzen 3 im wesentlichen nur Kräfte in lotrechter Wirkung aufgenommen werden, sodaß das Deckenpaneel 1 über die Bolzen 3 quasi am Flugzeugrumpf aufgehängt wird. Vorzugsweise an der gegenüberliegenden Randseite des Deckenpaneels 1 sind Befestigungselemente angeordnet, welche eine feste Lagerung des Deckenpaneels 1 an der Tragkonstruktion ermöglichen. Die Befestigungselemente dieses Festlagers haben die Form von Bolzen 4, welche auf entsprechend komplementär gestalteten Elementen in der Art befestigt werden, sodaß die Bolzen 4 auch Kräfte in Richtung des Deckenpaneels 1 aufnehmen.

Erfindungsgemäß sind Einrichtungen an der Festlagerseite vorhanden, welche ein werkzeugloses Öffnen der Befestigungen der Bolzen 4 gestatten. Im dargestellten Ausführungsbeispiel sind jeweils drei Bolzen 3 an der Loslagerseite und drei Bolzen 4 an der Festlagerseite jeweils auf einer Randseite des Deckenpaneels 1 aufeinanderfolgend in Flugrichtung angeordnet, wobei die Bolzen 3 des Loslagers vorteilhafterweise von der Längsmitte des Passagierraumes abgekehrt sind, sodaß die Wartung der hinter dem Deckenpaneel 1 befindlichen Einrichtungen einfacher möglich ist. Bei der Montage eines Deckenpaneels 1 gemäß dieser Ausführungsform werden die Bolzen 3 des Loslagers in die entsprechenden Einrichtungen an der Tragkonstruktion eingehängt od. dgl. und danach das Deckenpaneel 1 mit den Bolzen 4 des Festlagers auf die entsprechenden Befestigungseinrichtungen geklappt und automatisch oder manuell verriegelt. Die Bolzen 3, 4 sind fest mit dem Deckenpaneel 1 verbunden, beispielsweise verklebt oder verschraubt. Die vom Innenraum des Flugzeuges sichtbare Seite des Deckenpaneels 1 weist keinerlei Öffnungen od. dgl. zur Bedienung der Befestigungseinrichtungen auf, wodurch der optische Eindruck verbessert, die Reinigbarkeit erleichtert und unbefugtes Demontieren verhindert wird.

Der Begriff Paneel ist in seiner weitesten Bedeutung zu verstehen und kann als beliebige Abdeckplatte ausgebildet sein, deren Aufgabe es ist, Einrichtungen, Geräte od. dgl. in einer Grund- oder Tragkonstruktion zu verkleiden und allenfalls bündig mit einer Verkleidungswand od. dgl. abzuschließen.

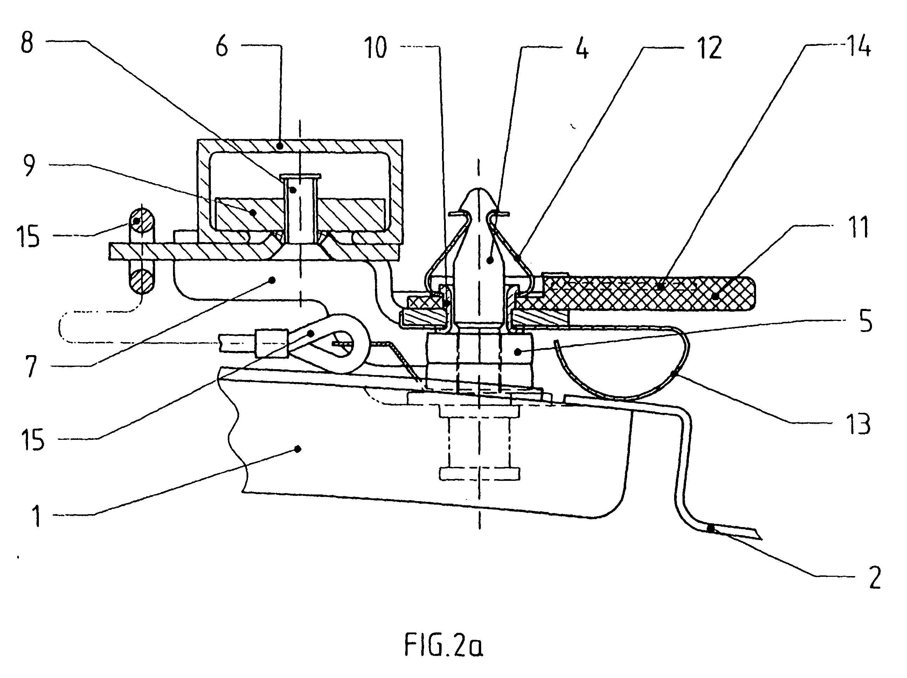

In den Fig. 2a bis 2c ist eine bevorzugte Ausführungsform eines Festlagers dargestellt. Gemäß Fig. 2a ist im Deckenpaneel 1 randseitig ein Bolzen 4 befestigt, z.B. eingeklebt. Über dem Bolzen 4 ist ein Dämpfungsring 5 aus elastischem Material, beispielsweise aus Gummi angeordnet, der die Vibrationen und Geräusche dämpft. Mit dem Flugzeugrumpf ist eine Tragkonstruktion, beispielsweise eine Profilschiene 6 mit C-förmigem Querschnitt in Längsrichtung des Flugzeuges verbunden. An der Profilschiene 6 werden an den entsprechenden Stellen die Einrichtungen zur Befestigung der Bolzen 4 auf bekannte Art befestigt. Im dargestellten Ausführungsbeispiel ist ein Lagerbock 7 mit Hilfe einer Schraube 8, z.B. einer Senkkopfschraube und einem mit Gewinde versehenen Riegel 9 an der Profilschiene 6 befestigt. Um eine Lösung der Verbindung aufgrund von Vibrationen zu vermeiden, ist das Gewinde des Riegels 9 vorzugsweise selbsthemmend ausgeführt. Entsprechend der Anzahl der Bolzen 4 sind die Lagerböcke 7 entlang der Profilschiene 6 fest angeordnet. Das andere Ende des Lagerbocks 7 weist eine Bohrung auf, in der eine Buchse 10 angeordnet ist, über welche ein Drehhebel 11 und eine Klammer 12 mit dem Lagerbock verbunden werden. Die Buchse 10 kann durch nicht dargestellte Sicken od. dgl. im Lagerbock 7 gegen Verdrehen gesichert sein. Der Bolzen 4 wird durch das Loch in der Buchse 10 gesteckt, wobei eine Verriegelung des Bolzens 4 mit dem Lagerbock 7 durch eine widerhakenförmige Gestaltung des freien Endes des Bolzens 4 und eine entsprechende Gestalt der Klammer 12 ermöglicht wird. Zum Entriegeln der Verbindung des Bolzens 4 mit dem Lagerbock 7 ist der Drehhebel 11 mit der Klammer 12 drehbar gelagert. Fig. 2a zeigt noch ein an das Deckenpaneel 1 anschließendes Seitenpaneel 2, welches durch eine entsprechende Form durch das Deckenpaneel 1 gehalten wird. Zur Vermeidung von Vibrationen und Geräuschen drückt eine am Lagerbock 7 befestigte Feder 13 das Seitenpaneel 2 an die Oberseite des Deckenpaneels 1. Um den Zugang zum Drehhebel 11 zur Demontage des Deckenpaneels 1 zu ermöglichen, wird das Seitenpaneel 2 nach außen geschoben, sodaß ein Spalt zwischen dem Deckenpaneel 1 und dem Seitenpaneel 2 freigegeben wird, durch welchen der Zugriff zum Drehhebel 11 ermöglicht wird. Zur leichteren Auffindbarkeit sind die Drehhebel 11 mit einer auffälligen Farbe, z.B. rot markiert.

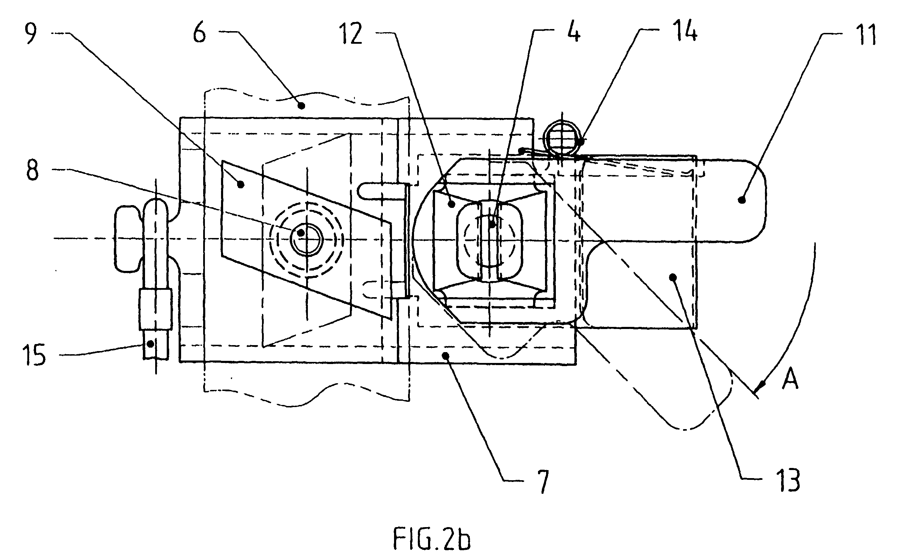

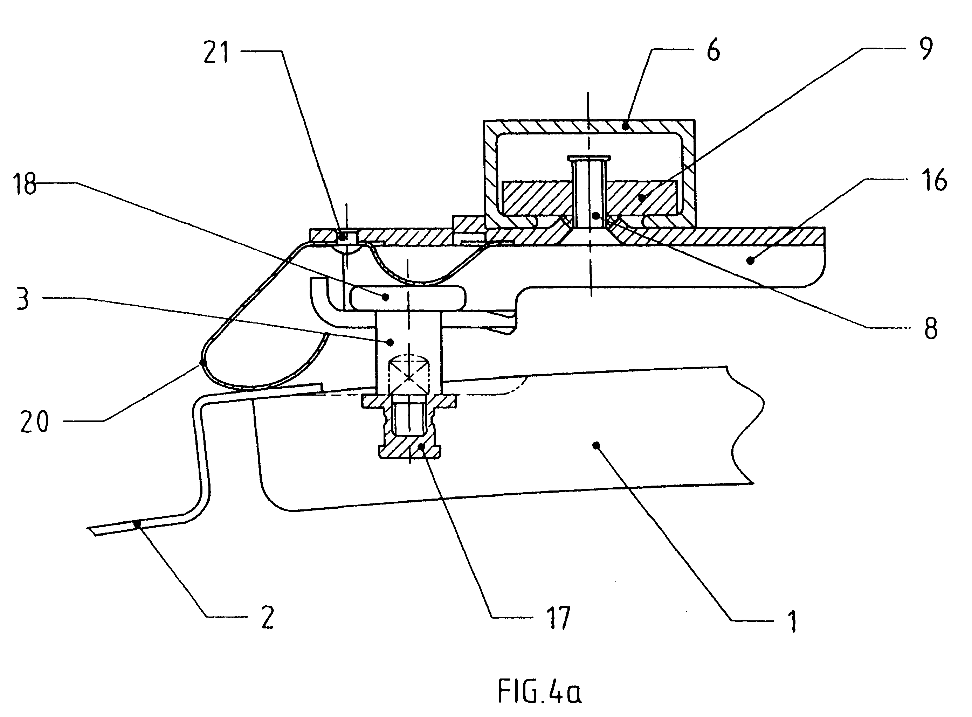

In der Draufsicht gemäß Fig. 2b befindet sich der Drehhebel 11 in verriegelter Stellung. Durch Drehung des Drehhebels 11 um etwa 45° in der Richtung des Pfeiles A kann der Verschluß entriegelt werden. Zu diesem Zweck ist das freie Ende des Bolzens 4 so geformt ist, daß bei Verdrehung des Drehhebels 11 und der damit verbundenen Klammer 12 diese automatisch aufgeweitet wird, sodaß der Bolzen 4 aus der Buchse 10 im Lagebock 7 gezogen werden kann. Im Fall eines Deckenpaneels 1 würde dieses automatisch bei Verdrehung des Drehhebels 11 jedes Verschlusses in die Entriegelungsposition aufgrund der Schwerkraft nach unten klappen. Dadurch wird die Demontage erleichtert. Um Beschädigungen an Bauteilkomponenten und Verletzungen des Wartungspersonals durch ein zu weites Herunterklappen des Deckenpaneels 1 zu vermeiden, können Halteseile 15 mit einem Ende am Lagerbock 7 des Festlagers und mit ihrem anderen Ende am Deckenpaneel 1 befestigt werden. Dadurch wird das Deckenpaneel 1 bei geöffneten Festlagern in einer der Länge des oder jedes Halteseils 15 entsprechenden Stellung gehalten. Um dennoch eine vollständige Demontage des Deckenpaneels 1 zu ermöglichen, ist das oder jedes Halteseil 15 ohne Verwendung von Werkzeug rasch und einfach lösbar. Dies kann z.B., wie dargestellt durch Schlaufen an den Enden des Halteseils 15, welche über entsprechende Ausformungen am Lagerbock 7 bzw. am Deckenpaneel 1 gestülpt werden, erreicht werden. Im Falle einer Fehlersuche brauchen nur die Drehhebel 11 aller Verschlüsse der Festlagerseite entriegelt werden, das Deckenpaneel 1 hinuntergeklappt werden und die dahinter befindlichen Einrichtungen inspiziert werden. Wenn eine komplette Demontage des Deckenpaneels 1 erforderlich ist, müssen die Bolzen auf der Loslagerseite entsprechend geöffnet werden (siehe Fig. 4a bis 4c), sodaß das gesamte Deckenpaneel 1 ohne Zuhilfenahme von Werkzeug entfernt werden kann. Weiters ist bei der dargestellten Ausführungsform eine Rückstellfeder 14 angeordnet, welche auf den Drehhebel 11 in Richtung der entriegelten Position (strichlierte Darstellung) wirkt. Während sich der Drehhebel 11 bei ordnungsgemäßer Verbindung des Deckenpaneels 1 mit der Tragkonstruktion 6, d.h. bei ordnungsgemäß eingerastetem Bolzen 4 in der verriegelten Position befindet, wird der Drehhebel 11 durch die Rückstellfeder 14 in die entriegelte Position (strichlierte Darstellung) gezwungen, wenn der Bolzen 4 nicht eingerastet ist. Dadurch wird die ordnungsgemäße Verbindung des Festlagers durch die Stellung des Drehhebels 11 angezeigt.

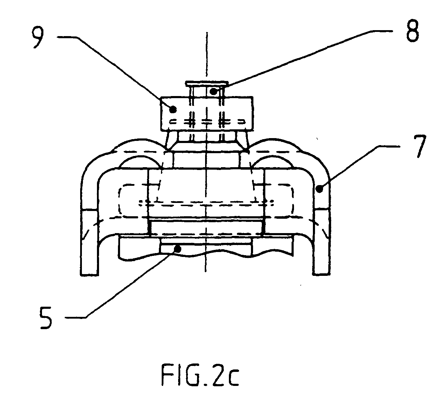

Fig. 2c zeigt der Vollständigkeit halber noch eine Seitenansicht des Festlagers gemäß Fig. 2a von links, wobei die Profilschiene 6 nicht dargestellt ist.

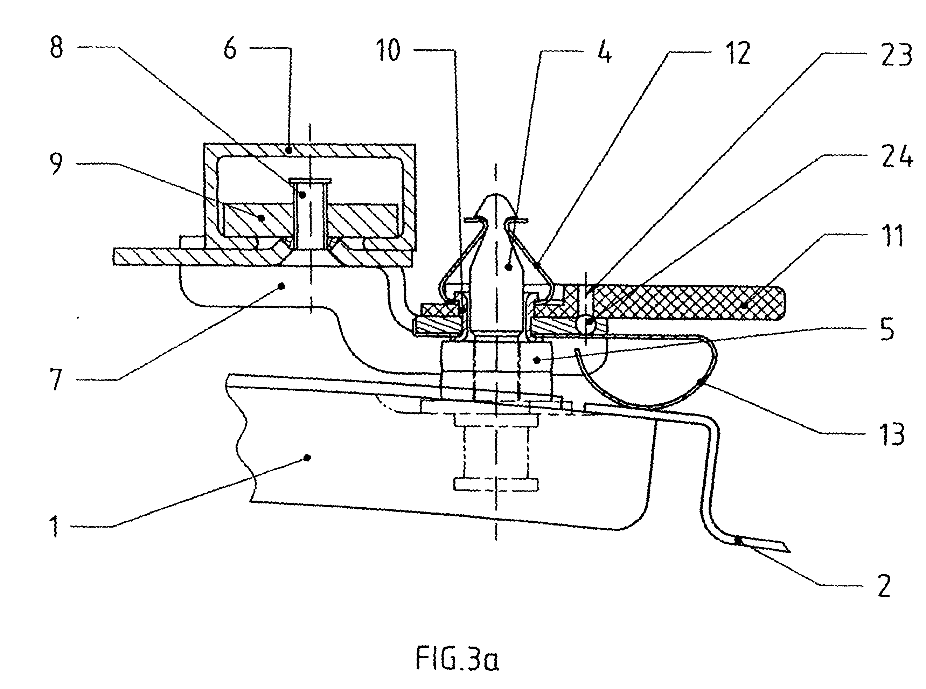

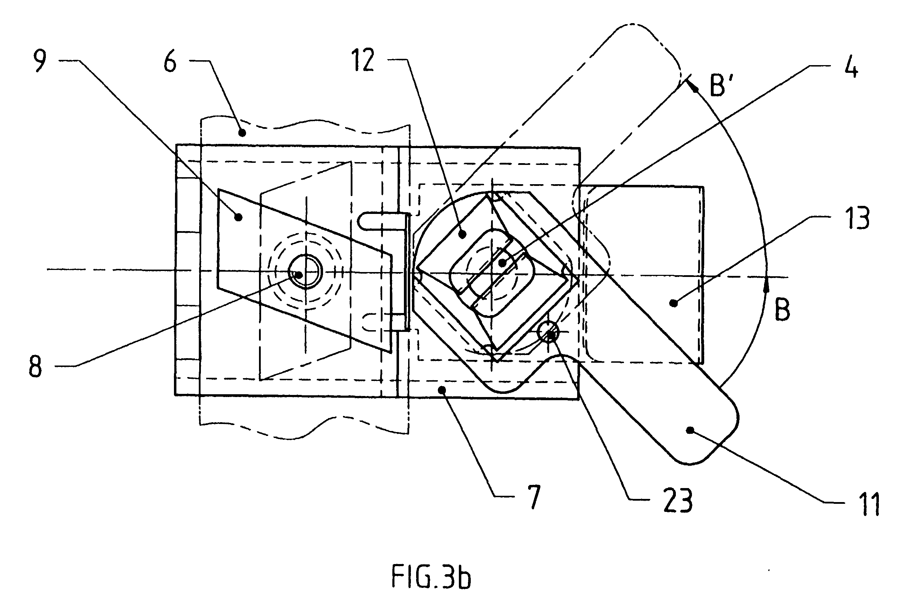

In den Fig. 3a und 3b ist eine andere Ausführungsform eines Festlagers dargestellt. Diese Variante weist im Gegensatz zur Ausführungsform gemäß den Fig. 2a bis 2c keine Rückstellfeder auf. Dahingegen weist diese Variante Haltemittel zum Schutz des Drehhebels 11 vor ungewollter Betätigung auf.

Wie aus der Ansicht von oben gemäß Fig. 3b ersichtlich, befindet sich der Drehhebel 11 in entriegelter Stellung. Durch Drehung des Drehhebels 11 um etwa 45° in Richtung des Pfeiles B wird der Verschluß verriegelt. Bei weiterer Verdrehung des Drehhebels 11 in Richtung des Pfeiles B' um etwa 45° wird der Verschluß wiederum entriegelt. Dadurch, daß der Drehhebel 11 von der verriegelten Position aus in beide Richtungen entriegelt werden kann, ist die Demontage des Deckenpaneels 1 erleichtert, da die Drehrichtung des Drehhebels 11 nicht berücksichtigt werden muß. Um den Drehhebel 11 in der verriegelten Stellung zu halten, ist eine Kugelfixierung vorgesehen, welche aus einem Loch 23 im Drehhebel 11 und einer Kugel 24, deren Durchmesser größer ist als jener des Lochs 23, besteht. In der verriegelten Position des Drehhebels 11 wird die Kugel 24 durch die Feder 13 in das Loch 23 gedrückt. Zum Entriegeln muß die Kraft der Feder 13 überwunden werden, wodurch die Kugel 24 aus dem Loch 23 verdrängt wird und der Drehhebel 11 in eine der entriegelten Positionen gebracht werden kann.

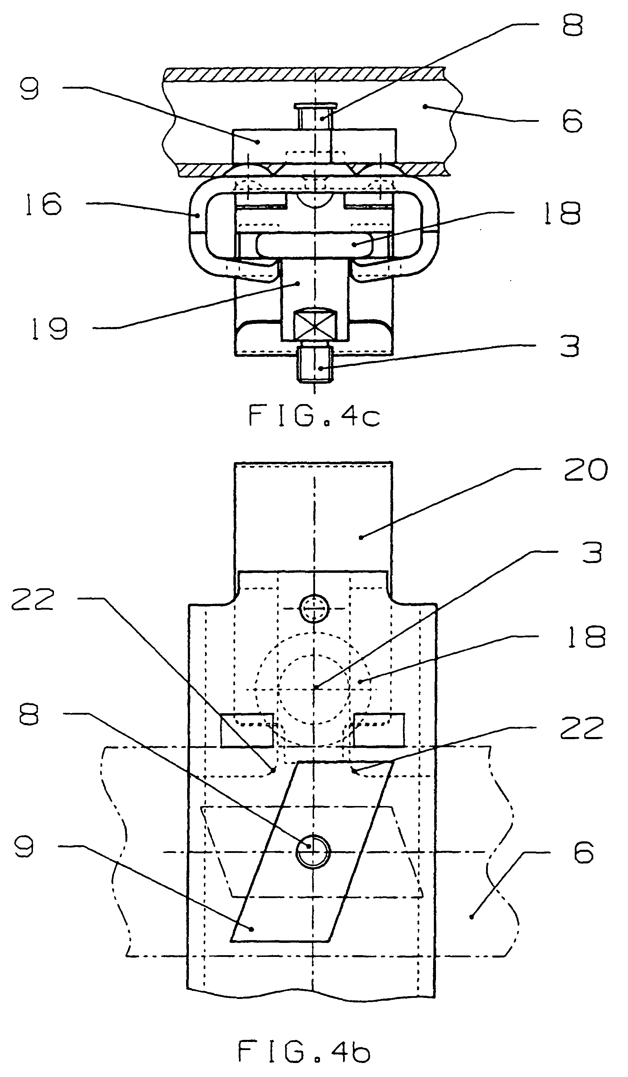

Die Ausführungsform des Loslagers gemäß Fig. 4a bis 4c besteht wiederum aus einem Lagerbock 16, der in gleicher Weise wie der Lagerbock 7 beim Festlager mit Hilfe einer Schraube 8, in diesem Fall z.B. einer Linsenschraube, und einem Riegel 9 an der Profilleiste 6 an Stellen entsprechend der Anordnung der Bolzen 3 am Deckenpaneel 1 befestigt ist. Der Bolzen 3 des Loslagers wird in einen Einsatz 17, der mit dem Deckenpaneel 1 fest verbunden, beispielsweise verklebt ist, eingeschraubt. Der Bolzen 3 ist an seinem, dem Deckenpaneel 1 abgekehrten freien Ende mit einem Kopf 18 versehen, der größer ist als der Durchmesser des Bolzens 3. Dadurch kann der Bolzen 3 in einen entsprechenden Schlitz 19 im Lagerbock 16 eingeschoben werden (siehe Fig. 4c). Am Lagerbock 16 ist eine Feder 20 beispielsweise über eine Niete 21 befestigt. Die Feder 20 besitzt zwei Funktionen. Einerseits wird der Kopf 18 des Bolzens 3 gegen den Lagerbock gedrückt, und andererseits wird ein allenfalls an das Deckenpaneel 1 anschließendes Seitenpaneel 2 an die Oberseite des Deckenpaneels gedrückt, um in beiden Fällen Vibrationen zu vermeiden. Wie aus Fig. 4b erkennbar, ist der Schlitz 19 im Lagerbock 16 durch beiderseitige Rundungen 22 nach außen erweitert, um ein Einführen der Bolzen 3 in den Schlitz zu erleichtern. Aus der Ansicht gemäß Fig. 4c ist der Schlitz 19 im Lagerbock 16 erkennbar, in welchen der Bolzen 3 eingeschoben wird, welcher aufgrund des Kopfes 18 im Lagerbock 16 gehalten wird.

Die in den Abbildungen dargestellten Ausführungsformen für die erfindungsgemäße Befestigung eines Deckenpaneels zeigen nur Beispiele der Realisierung. Für die Realisierung des Los- und Festlagers sind natürlich auch andere Ausführungsformen denkbar. Darüber hinaus ist eine Anwendung auch für Seitenwand- oder Bodenelemente und auch in anderen Bereichen als dem Flugzeugbau, beispielsweise bei Fahrzeugen oder in der Schiffahrt möglich.

## Patentansprüche

1. Anordnung umfassend eine Abdeckplatte (1), eine Tragkonstruktion (6), und eine Einrichtung mit mindestens zwei Befestigungselementen (3, 4), wobei alle Bestandteile der Befestigungselemente (3, 4) zur Verbindung mit der Abdeckplatte (1) und der Tragkonstruktion (6) eingerichtet sind, wobei die zur Verbindung mit der Abdeckplatte (1) eingerichteten Befestigungselemente (3, 4) ausschließlich mit der, der Tragkonstruktion (6) zugewandten Seite der Abdeckplatte (1) verbindbar sind, **dadurch gekennzeichnet, dass** zumindest ein Befestigungselement (3) als Loslager zur Aufnahme der im Wesentlichen senkrecht zur Abdeckplatte (1) wirkenden Kräfte und zumindest ein Befestigungselement (4) als Festlager zur Aufnahme auch der im Wesentlichen in Richtung der Abdeckplatte (1) wirkenden Kräfte ausgebildet ist, und dass das oder jedes als Festlager ausgebildete Befestigungselement (4) Mittel zur werkzeuglosen Verund Entriegelung aufweist.

2. Anordnung nach Anspruch 1, **dadurch gekennzeichnet, dass** alle Befestigungselemente zur randseitigen Verbindung mit der Abdeckplatte (1) eingerichtet sind.

3. Anordnung nach Anspruch 2, **dadurch gekennzeichnet, dass** jedes als Loslager ausgebildete Befestigungselement zur Verbindung an einer Randseite der Abdeckplatte (1) und dass jedes als Festlager ausgebildete Befestigungselement zur Verbindung an der gegenüberliegenden Randseite der Abdeckplatte (1) eingerichtet ist.

4. Anordnung nach mindestens einem der Ansprüche 1 bis 3, **dadurch gekennzeichnet, dass** jedes als Loslager ausgebildete Befestigungselement durch einen mit der Abdeckplatte (1) fest verbindbaren Bolzen (3) gebildet ist, welcher Bolzen (3) in einen mit der Tragkonstruktion (6) fest verbindbaren Lagerbock (16) einhängbar ist, und dass jedes als Festlager ausgebildete Befestigungselement als Schnappverschluss (4, 12) ausgebildet ist, welcher Schnappverschluss (4, 12) werkzeuglos öffenbar ist.

5. Anordnung nach Anspruch 4, **dadurch gekennzeichnet, dass** der Bolzen (3) mit der Abdeckplatte (1) durch Verklebung verbindbar ist, und dass der Bolzen (3) mit einem Kopf (18) ausgebildet ist.

6. Anordnung nach Anspruch 4 oder 5, **dadurch gekennzeichnet, dass** der Lagerbock (16) kastenförmige, einseitig offene, unten geschlitzte Gestalt besitzt.

7. Anordnung nach einem der Ansprüche 4 bis 6, **dadurch gekennzeichnet, dass** am Lagerbock (16) eine Feder (20) befestigt ist, die derart geformt ist, dass sie den Bolzen (3) mit dem Kopf (18) festhält.

8. Anordnung nach einem der Ansprüche 4 bis 7, **dadurch gekennzeichnet, dass** jedes als Schnappverschluss (4, 12) ausgebildete Festlager durch einen seitlich der Abdeckplatte (1) zugänglichen Drehhebel (11) werkzeuglos öffenbar ist.

9. Anordnung nach Anspruch 8, **gekennzeichnet durch** eine auf den Drehhebel (11) wirkende Rückstellfeder (14), **durch** welche der Drehhebel (11) im offenem Zustand des Schnappverschlusses (4, 12) in eine entriegelnde Stellung bringbar ist.

10. Anordnung nach Anspruch 8, **dadurch gekennzeichnet, dass** der Drehhebel (11) zum Schutz vor ungewollter Betätigung in der, den Schnappverschluss (4, 12) verriegelnden Stellung Haltemittel (13, 23, 24) aufweist, wobei der Drehhebel (11) in Überwindung dieser Haltemittel (13, 23, 24) in eine, den Schnappverschluss (4, 12) entriegelnde Stellung bringbar ist.

11. Anordnung nach einem der Ansprüche 4 bis 10, **dadurch gekennzeichnet, dass** jedes als Schnappverschluss ausgebildete Festlager durch einen mit der Abdeckplatte (1) vorzugsweise durch Verklebung fest verbindbaren Bolzen (4) gebildet ist, welcher Bolzen (4) am freien Ende zugespitzt und mit seitlichen Kerben versehen ist, und dass eine mit der Tragkonstruktion (6) verbindbare Klammer (12) vorgesehen ist, deren zwei federnde Enden in die Kerben des Bolzens (4) eingreifen, wobei die Klammer (12) um die Achse des Bolzens (4) gegenüber der Tragkonstruktion (6) drehbar angeordnet ist.

12. Anordnung nach Anspruch 11, **dadurch gekennzeichnet, dass** die Klammer (12) durch eine dreieckförmig gebogene Blattfeder mit einer Bohrung im mittleren Basisteil für den Durchtritt des Bolzens (4) gebildet ist, und dass die Klammer (12) mit einem Drehhebel (11) verbunden und mit diesem in einem Lagerbock (7) oder einem damit verbundenen Bauteil um ihre Symmetrieachse drehbar gelagert ist.

13. Anordnung nach Anspruch 11 oder 12, **dadurch gekennzeichnet, dass** die Klammer (12) und der Drehhebel (11) über eine Buchse (10) miteinander verbunden und die Buchse (10) in einer Bohrung des Lagerbocks (7) oder einem damit verbundenen Bauteil drehbar gelagert ist.

14. Anordnung nach einem der Ansprüche 11 bis 13, **dadurch gekennzeichnet, dass** zwischen dem Drehhebel (11) und dem Lagerbock (7) oder einem damit verbundenen Bauteil eine Rückstellfeder (14) vorgesehen ist, die die Klammer (12) in die Offenstellung zwingt und dass Klammer (12) und Kerben im Bolzen (4) derart ausgebildet sind, dass die Klammer (12) im eingerasteten Zustand durch die Kerben im Bolzen (4) in Schließstellung gehalten wird.

15. Anordnung nach einem der Ansprüche 11 bis 14, **dadurch gekennzeichnet, dass** der die Klammer (12) tragende Lagerbock (7) oder ein damit verbundener Bauteil mit der Tragkonstruktion (6) über eine Schraube (8) und einen Riegel (9) verbunden ist.

16. Anordnung nach einem der Ansprüche 1 bis 15, **dadurch gekennzeichnet, dass** zumindest ein Halteseil (15) jeweils mit dem einen Ende an der Abdeckplatte (1) bzw. einem damit verbundenen Bauteil und jeweils mit dem anderen Ende an der Tragkonstruktion (6) bzw. einem damit verbundenen Bauteil befestigbar ist, und dass die Befestigungen des oder jedes Halteseils (15) werkzeuglos öffenbar sind.

17. Anordnung nach einem der Ansprüche 1 bis 16, **dadurch gekennzeichnet, dass** die Befestigungselemente Mittel zur Dämpfung von Vibrationen, beispielsweise Dämpfungsringe (5) aus elastischem Material oder Federn (13, 20) aufweisen.

18. Anordnung nach einem der Ansprüche 1 bis 17, **dadurch gekennzeichnet, dass** an den Befestigungselementen Einrichtungen zur lösbaren Verbindung der Abdeckplatte (1) mit daran anschließenden Abdeckplatten (2) vorgesehen sind.

19. Anordnung nach Anspruch 18, **dadurch gekennzeichnet, dass** die Einrichtungen zur lösbaren Verbindung der Abdeckplatte (1) mit daran anschließenden Abdeckplatten (2) durch Federelemente (13, 20) gebildet sind.

20. Abdeckplatte (1) für eine Anordnung gemäß einem der Ansprüche 1 bis 19, mit zumindest zwei Befestigungselementen (3, 4) zur Verbindung der Abdeckplatte (1) mit einer Tragkonstruktion (6), wobei die Befestigungselemente (3, 4) ausschließlich an der, der Tragkonstruktion (6) zugewandten Seite der Abdeckplatte (1) angeordnet sind, **dadurch gekennzeichnet, dass** zumindest ein Befestigungselement (3) als Loslager zur Aufnahme der im Wesentlichen senkrecht zur Abdeckplatte (1) wirkenden Kräfte und zumindest ein Befestigungselement (4) als Festlager zur Aufnahme auch der im Wesentlichen in Richtung der Abdeckplatte (1) wirkenden Kräfte ausgebildet ist, und dass das oder jedes als Festlager ausgebildete Befestigungselement (4) Mittel zur werkzeuglosen Ver- und Entriegelung aufweist.

21. Abdeckplatte nach Anspruch 20, **dadurch gekennzeichnet, dass** alle Befestigungselemente (3, 4) randseitig der Abdeckplatte (1) angeordnet sind.

22. Abdeckplatte nach Anspruch 21, **dadurch gekennzeichnet, dass** jedes als Loslager ausgebildete Befestigungselement (3) an einer Randseite der Abdeckplatte (1) und dass jedes als Festlager ausgebildete Befestigungselement (4) an der gegenüberliegenden Randseite der Abdeckplatte (1) angeordnet ist.

23. Abdeckplatte nach mindestens einem der Ansprüche 20 bis 22, **dadurch gekennzeichnet, dass** jedes als Loslager ausgebildete Befestigungselement (3) durch einen mit der Abdeckplatte (1) fest verbundenen Bolzen (3) gebildet ist, welcher Bolzen (3) in einen mit der Tragkonstruktion (6) fest verbindbaren Lagerbock (16) einhängbar ist, und dass jedes als Festlager ausgebildete Befestigungselement (4) als Schnappverschluss (4, 12) ausgebildet ist, welcher Schnappverschluss (4, 12) werkzeuglos öffenbar ist.

24. Abdeckplatte nach Anspruch 23, **dadurch gekennzeichnet, dass** der Bolzen (3) mit der Abdeckplatte (1) verklebt ist, und dass der Bolzen (3) mit einem Kopf (18) ausgebildet ist.

25. Abdeckplatte nach Anspruch 23 oder 24, **dadurch gekennzeichnet, dass** jedes als Schnappverschluss ausgebildete Festlager durch einen mit der Abdeckplatte (1) verklebten Bolzen (4) gebildet ist, welcher Bolzen (4) am freien Ende zugespitzt und mit seitlichen Kerben versehen ist, und dass eine mit der Tragkonstruktion (6) verbindbare Klammer (12) vorgesehen ist, deren zwei federnde Enden in die Kerben des Bolzens (4) eingreifen, wobei die Klammer (12) um die Achse des Bolzens (4) gegenüber der Tragkonstruktion (6) drehbar angeordnet ist.

26. Abdeckplatte nach einem der Ansprüche 20 bis 25, **dadurch gekennzeichnet, dass** zumindest ein Halteseil (15) jeweils mit dem einen Ende an der Abdeckplatte (1) bzw. einem damit verbundenen Bauteil verbunden ist und jeweils mit dem anderen Ende an der Tragkonstruktion (6) bzw. einem damit verbundenen Bauteil befestigbar ist, und dass die Befestigungen des oder jedes Halteseils (15) werkzeuglos öffenbar sind.

27. Abdeckplatte nach einem der Ansprüche 20 bis 26, **dadurch gekennzeichnet, dass** die Befestigungselemente Mittel zur Dämpfung von Vibrationen, beispielsweise Dämpfungsringe (5) aus elastischem Material oder Federn (13, 20) aufweisen.

## Claims

1. An arrangement comprising a covering panel (1), a load-bearing structure (6), and a device with at least two fastening elements (3, 4), wherein all the constituent parts of the fastening elements (3, 4) are adapted to be connected to the covering panel (1) and to the load-bearing structure (6), and wherein the fastening elements (3, 4) adapted to be connected to the covering panel (1) are exclusively connectable to that side of the covering panel (1) which is directed toward the load-bearing structure (6), **characterised in that** at least one fastening element (3) is designed as a movable bearing for absorbing the forces which act essentially perpendicularly with respect to the covering panel (1), and at least one fastening element (4) is designed as a fixed bearing for additionally absorbing the forces which act essentially in the direction of the covering panel (1), and **in that** the, or each, fastening element (4) which is designed as a fixed bearing has means for tool-free locking and unlocking.

2. An arrangement according to claim 1, **characterised in that** all the fastening elements are adapted to be fastened to the covering panel (1) at the border thereof.

3. An arrangement according to claim 2, **characterised in that** each fastening element designed as a movable bearing is adapted to be connected to one border side of the covering panel (1) and **in that** each fastening element designed as a fixed bearing is adapted to be connected to the opposite border side of the covering panel (1).

4. An arrangement according to at least one of the claims 1 to 3, **characterised in that** each fastening element which is designed as a movable bearing is formed by a bolt (3) which is fixedly connectable to the covering panel (1), which bolt (3) is suspendible in a bearing block (16) which is fixedly connectable to the load-bearing structure (6), and **in that** each fastening element which is designed as a fixed bearing is designed as a snap-action closure (4, 12), which snap-action closure (4, 12) is openable in a tool-free manner.

5. An arrangement according to claim 4, **characterised in that** the bolt (3) is connectable to the covering panel (1) by adhesive bonding, and that the bolt (3) is formed with a head (18).

6. An arrangement according to claim 4 or 5, **characterised in that** the bearing block (16) has a box-shaped configuration which is open on one side and has a slot at its bottom.

7. An arrangement according to any one of claims 4 to 6, **characterised in that** a spring (20) is fastened on the bearing block (16), which spring is shaped such that it retains the bolt (3) by its head (18).

8. An arrangement according to any one of claims 4 to 7, **characterised in that** each fixed bearing which is designed as snap-action closure (4, 12) is openable in tool-free manner by a turning lever (11) which is accessible from the side of the covering panel (1).

9. An arrangement according to claim 8, **characterised by** a restoring spring (14) which acts on the turning lever (11), and by means of which in the open state of the snap-action closure (4, 12), the turning lever (11) is movable into an unlocking position.

10. An arrangement according to claim 8, **characterised in that** in order to protect against undesired actuation in the position, in which the snap-action closure (4, 12) is locked, the turning lever (11) has retaining means (13, 23, 24), it being possible by overcoming these retaining means (13, 23, 24), for the turning lever (11) to be moved into a position in which the snap-action closure (4, 12) is unlocked.

11. An arrangement according to any one of claims 4 to 10, **characterised in that** each fixed bearing which is designed as a snap-action closure is formed by a bolt (4) fixedly connectable to the covering panel (1), preferably by adhesive bonding, which bolt (4) at its free end is tapered and provided with lateral notches, and **in that** a clamp (12) connectable to the load-bearing structure (6) is provided, the two resilient ends of the clamp engaging in the notches of the bolt (4), the clamp (12) being arranged about the axis of the bolt (4) so as to be rotatable relative to the load-bearing structure (6).

12. An arrangement according to claim 11, **characterised in that** the clamp (12) is formed by a triangularly bent plate spring having a bore in its middle base portion for the passage of the bolt (4), and **in that** the clamp (12) is connected to a turning lever (11) and, together therewith, is mounted to be rotatable about its axis of symmetry in a bearing block (7) or in a component connected thereto.

13. An arrangement according to claim 11 or 12, **characterised in that** the clamp (12) and the turning lever (11) are interconnected via a bushing (10) and the bushing (10) is rotatably mounted in a bore of the bearing block (7) or in a component connected thereto.

14. An arrangement according to any one of claims 11 to 13, **characterised in that** a restoring spring (14) is provided between the turning lever (11) and the bearing block (7) or a component connected thereto, which restoring spring forces the clamp (12) into its open position, and **in that** the clamp (12) and notches in the bolt (4) are designed such that the clamp (12) in its snapped-in state is held in closing position by the notches in the bolt (4).

15. An arrangement according to any one of claims 11 to 14, **characterised in that** the bearing block (7) carrying the clamp (12) or a component connected to the bearing block is connected to the load-bearing structure (6) via a screw (8) and a catch (9).

16. An arrangement according to any one of claims 1 to 15, **characterised in that** at least one retaining cable (15) is each attachable by one of its ends to the covering panel (1), or to a component connected therewith, respectively, and by its other end, to the load-bearing structure (6), or to a component connected thereto, respectively, and **in that** the fastenings of the or each retaining cable (15) are openable in tool-free manner.

17. An arrangement according to any one of claims 1 to 16, **characterised in that** the fastening elements comprise means for damping vibrations, e.g. damping rings (5) of elastic material, or springs (13, 20).

18. An arrangement according to any one of claims 1 to 17, **characterised in that** means for releasably connecting the covering panel (1) to adjoining covering panels (2) are provided on the fastening elements.

19. An arrangement according to claim 18, **characterised in that** the means for releasably connecting the covering panel (1) to adjoining covering panels (2) are formed by spring elements (13, 20).

20. A covering panel (1) for an arrangement according to any one of claims 1 to 19, with at least two fastening,elements (3, 4) for connecting the covering panel (1) to a load-bearing structure (6), wherein the fastening elements (3, 4) are exclusively arranged on that side of the covering panel (1) which is directed toward the load-bearing structure (6), **characterised in that** at least one fastening element (3) is designed as a movable bearing for absorbing the forces which act essentially perpendicularly with respect to the covering panel (1), and at least one fastening element (4) is designed as a fixed bearing for additionally absorbing the forces which act essentially in the direction of the covering panel (1), and **in that** the, or each, fastening element (4) which is designed as a fixed bearing has means for tool-free locking and unlocking.

21. A covering panel according to claim 20, **characterised in that** all the fastening elements (3, 4) are arranged on the covering panel (1) at the border thereof.

22. A covering panel according to claim 21, **characterised in that** each fastening element (3) designed as a movable bearing is arranged on one border side of the covering panel (1) and **in that** each fastening element (4) designed as a fixed bearing is arranged on the opposite border side of the covering panel (1).

23. A covering panel according to at least one of claims 20 to 22, **characterised in that** each fastening element (3) which is designed as a movable bearing is formed by a bolt (3) which is fixedly connected to the covering panel (1), which bolt (3) is suspendible in a bearing block (16) which is fixedly connectable to the load-bearing structure (6), and **in that** each fastening element (4) which is designed as a fixed bearing is designed as a snap-action closure (4, 12), which snap-action closure (4, 12) is openable in a tool-free manner.

24. A covering panel according to claim 23, **characterised in that** the bolt (3) is adhesively bonded to the covering panel (1), and that the bolt (3) is formed with a head (18).

25. A covering panel according to claim 23 or 24, **characterised in that** each fixed bearing which is designed as a snap-action closure is formed by a bolt (4) adhesively bonded to the covering panel (1), which bolt (4) at its free end is tapered and provided with lateral notches, and **in that** a clamp (12) connectable to the load-bearing structure (6) is provided, the two resilient ends of the clamp engaging in the notches of the bolt (4), the clamp (12) being arranged about the axis of the bolt (4) so as to be rotatable relative to the load-bearing structure (6).

26. A covering panel according to any one of claims 20 to 25, **characterised in that** at least one retaining cable (15) is each connected by one of its ends to the covering panel (1), or to a component connected thereto, respectively, and by its other end, is attachable to the load-bearing structure (6), or to a component connected thereto, respectively, and **in that** the fastenings of the or each retaining cable (15) are openable in tool-free manner.

27. A covering panel according to any one of claims 20 to 26, **characterised in that** the fastening elements comprise means for damping vibrations, e.g. damping rings (5) of elastic material, or springs (13, 20).

## Revendications

1. Agencement comprenant un panneau de recouvrement (1), une construction portante (6) et un dispositif avec au moins deux éléments de fixation (3, 4), toutes les parties constitutives des éléments de fixation (3, 4) étant conçues pour la liaison avec le panneau de recouvrement (1) et la construction portante (6), les éléments de fixation (3, 4) conçus pour la liaison avec le panneau de recouvrement (1) pouvant être reliés exclusivement à la face du panneau de recouvrement (1) tournée vers la construction portante (6), **caractérisé en ce qu'**au moins un élément de fixation (3) est réalisé comme palier libre destiné à absorber les forces agissant sensiblement perpendiculairement au panneau de recouvrement (1), et au moins un élément de fixation (4) étant réalisé comme palier fixe pour absorber aussi les forces agissant sensiblement dans la direction du panneau de recouvrement (1), et **en ce que** le ou chaque élément de fixation (4), réalisé comme palier fixe, comporte des moyens pour le verrouillage et le déverrouillage sans outil.

2. Agencement selon la revendication 1, **caractérisé en ce que** tous les éléments de fixation sont conçus pour la liaison sur les bords avec le panneau de recouvrement (1).

3. Agencement selon la revendication 2, **caractérisé en ce que** chaque élément de fixation, réalisé comme palier libre, est conçu pour la liaison sur un côté de bordure du panneau de recouvrement (1), et **en ce que** chaque élément de fixation réalisé comme palier fixe est conçu pour la liaison sur le côté de bordure opposé du panneau de recouvrement (1).

4. Agencement selon l'une au moins des revendications 1 à 3, **caractérisé en ce que** chaque élément de fixation réalisé comme palier libre est formé par une tige (3) pouvant être reliée de manière fixe au panneau de recouvrement (1), laquelle tige (3) peut être accrochée dans un support (7) pouvant être relié de manière fixe à la construction portante (6), et **en ce que** chaque élément de fixation réalisé comme palier (6) est réalisé comme fermeture à déclic (4, 12), laquelle fermeture à déclic (4, 12) peut être ouverte sans outil.

5. Agencement selon la revendication 4, **caractérisé en ce que** la tige (3) peut être reliée par collage au panneau de recouvrement (1), et **en ce que** la tige (3) est réalisée avec une tête (18).

6. Agencement selon la revendication 4 ou 5, **caractérisé en ce que** le support (16) présente une forme en caisson, ouvert d'un côté, fendu à sa partie inférieure.

7. Agencement selon l'une des revendications 4 à 6, **caractérisé en ce que** sur le support (16) est fixé un ressort (20) qui a une forme telle qu'il fixe la tige (3) avec la tête (18).

8. Agencement selon l'une des revendications 4 à 7, **caractérisé en ce que** chaque palier fixe, réalisé comme fermeture à déclic (4, 12), peut être ouvert sans outil par un levier tournant (11) accessible sur le côté du panneau de recouvrement (1).

9. Agencement selon la revendication 8, **caractérisé par** un ressort de rappel (14) agissant sur le levier tournant (11), par lequel le levier tournant (11) peut être amené dans une position de déverrouillage, à l'état ouvert de la fermeture déclic (4, 12).

10. Agencement selon la revendication 8, **caractérisé en ce que** le levier tournant (11) comporte des moyens de retenue (13, 23, 24) verrouillant la fermeture à déclic (4, 12), en vue de la protection contre un actionnement involontaire, le levier tournant (11) pouvant être amené dans une position déverrouillant la fermeture à déclic (4, 12), en surmontant ces moyens de retenue (13, 23, 24).

11. Agencement selon l'une des revendications 4 à 10, **caractérisé en ce que** chaque palier fixe réalisé comme fermeture à déclic est formé par une tige (4) pouvant être reliée fixement, de préférence par collage, au panneau de recouvrement (1), laquelle tige (4) est affûtée à son extrémité libre et pourvue d'encoches latérales, et **en ce qu'**il est prévu une agrafe (12) pouvant être reliée à la construction portante (6), dont deux extrémités élastiques s'engagent dans les encoches de la tige (4), l'agrafe (12) étant disposée tournante par rapport à la construction portante (6), autour de l'axe de la tige (4).

12. Agencement selon la revendication 11, **caractérisé en ce que** l'agrafe (12) est formée par un ressort à lames cintré en forme triangulaire avec un perçage dans la partie centrale de la base pour le passage de la tige (4), et **en ce que** l'agrafe (12) est reliée à un levier tournant (11), et est supportée avec celui-ci dans un support (16) ou un composant relié à celui-ci, de manière à pouvoir tourner autour de son axe de symétrie.

13. Agencement selon la revendication 11 ou 12, **caractérisé en ce que** l'agrafe (12) et le levier tournant (11) sont reliés entre eux par une douille (10), et la douille (10) est montée tournante dans un perçage du support (7) ou un composant relié à celui-ci.

14. Agencement selon l'une des revendications 11 à 13, **caractérisé en ce qu'**entre le levier tournant (11) et le support (7) ou un composant relié à celui-ci, il est prévu un ressort de rappel (14) qui force l'agrafe (12) dans la position ouverte, et **en ce que** l'agrafe (12) et des encoches de la tige (4) sont réalisées de manière qu'à l'état encliqueté, l'agrafe (12) soit maintenue en position fermée par les encoches de la tige (4).

15. Agencement selon l'une des revendications 11 à 14, **caractérisé en ce que** le support (7), portant l'agrafe (12), ou un composant relié à celui-ci, est relié à la construction portante (6) par une vis (8) et un verrou (9).

16. Agencement selon l'une des revendications 1 à 15, **caractérisé en ce qu'**au moins un câble de retenue (15) peut être fixé par une extrémité au panneau de recouvrement (1) ou à un composant relié à celui-ci, et par son autre extrémité à la construction portante (6) ou à un composant relié à celui-ci, et **en ce que** les fixations du ou de chaque câble de retenue (15) peuvent être ouvertes sans outil.

17. Agencement selon l'une des revendications 1 à 16, **caractérisé en ce que** les éléments de fixation comportent des moyens pour amortir les vibrations, par exemple des anneaux d'amortissement (5) en matière élastique ou des ressorts (13, 20).

18. Agencement selon l'une des revendications 1 à 17, **caractérisé en ce que** sur les éléments de fixation sont prévus des dispositifs pour la liaison séparable du panneau de recouvrement (1) avec des panneaux de recouvrement (2) adjacents à celui-ci.

19. Agencement selon la revendication 18, **caractérisé en ce que** les dispositifs pour la liaison séparable du panneau de recouvrement (1) aux panneaux de recouvrement (2) adjacents à celui-ci sont formés par des éléments à ressort (13, 20).

20. Panneau de recouvrement (1) pour un agencement selon l'une des revendications 1 à 19, avec au moins deux éléments de fixation (3, 4) pour la liaison du panneau de recouvrement (1) à une construction portante (6), les éléments de fixation (3, 4) étant disposés exclusivement sur la face du panneau de recouvrement (1) tournée vers la construction portante (6), **caractérisé en ce qu'**au moins un élément de fixation (3) est réalisé comme palier libre destiné à absorber les forces agissant sensiblement perpendiculairement au panneau de recouvrement (1) et au moins un élément de fixation (4) est réalisé comme palier fixe pour absorber aussi les forces agissant sensiblement dans la direction du panneau de recouvrement (1), et **en ce que** le ou chaque élément de fixation (4) réalisé comme palier fixe comporte des moyens pour le verrouillage et le déverrouillage sans outil.

21. Panneau de recouvrement selon la revendication 20, **caractérisé en ce que** tous les éléments de fixation (3, 4) sont disposés côté bordure du panneau de recouvrement (1).

22. Panneau de recouvrement selon la revendication 21, **caractérisé en ce que** chaque élément de fixation (3), réalisé comme palier libre, est disposé sur un côté de bordure du panneau de recouvrement (1) et **en ce que** chaque élément de fixation (4) réalisé comme palier fixe est disposé sur le côté de bordure opposé du panneau de recouvrement (1).

23. Panneau de recouvrement selon l'une au moins des revendications 20 à 22, **caractérisé en ce que** chaque élément de fixation (3) réalisé comme palier libre est formé par une tige (3) solidaire du panneau de recouvrement (1), laquelle tige (3) peut être accrochée dans un support (16) pouvant être relié de manière fixe à la construction portante (6), et **en ce que** chaque élément de fixation (4) réalisé comme palier fixe est réalisé comme fermeture à déclic (4, 12) laquelle fermeture à déclic (4, 12) peut être ouverte sans outil.

24. Panneau de recouvrement selon la revendication 23, **caractérisé en ce que** la tige (3) est collée avec le panneau de recouvrement (1), et **en ce que** la tige (3) est réalisée avec une tête (18).

25. Panneau de recouvrement selon la revendication 23 ou 24, **caractérisé en ce que** chaque palier (6), réalisé comme fermeture à déclic, est formé par une tige (4) collée avec le panneau de recouvrement (1), laquelle tige (4) est affûtée à son extrémité libre et pourvue d'encoches latérales, et **en ce qu'**il est prévu une agrafe (12), pouvant être reliée à la construction portante (6), dont deux extrémités élastiques s'engagent dans les encoches de la tige (4), l'agrafe (12) étant disposée de manière à pouvoir tourner autour de l'axe de la tige (4) par rapport à la construction portante (6).

26. Panneau de recouvrement selon l'une des revendications 20 à 25, **caractérisé en ce qu'**au moins un câble de retenue (15) est relié par une extrémité au panneau de recouvrement (1) ou à un composant relié à celui-ci, et peut être fixé, par son autre extrémité, à la construction portante (6) ou à un composant relié à celle-ci, et **en ce que** les fixations du ou de chaque câble de retenue (15) peuvent être ouvertes sans outil.

27. Panneau de recouvrement selon l'une des revendications 20 à 26, **caractérisé en ce que** les éléments de fixation comportent des moyens pour amortir les vibrations, par exemple des anneaux d'amortissement (5) en matière élastique ou des ressorts (13, 20).
